Europäisches Patentamt

European Patent Office

Office européen des brevets

(11) Publication number: **0 485 624 A1**

## EUROPEAN PATENT APPLICATION
### published in accordance with Art. 158(3) EPC

(21) Application number: **91909838.4**

(22) Date of filing: **28.05.91**

(86) International application number:
**PCT/JP91/00716**

(87) International publication number:
**WO 91/19345 (12.12.91 91/28)**

(51) Int. Cl.⁵: **H02K 9/18**

(30) Priority: **29.05.90 JP 137242/90**

(43) Date of publication of application:
**20.05.92 Bulletin 92/21**

(84) Designated Contracting States:
**DE IT**

(71) Applicant: **FANUC LTD.**
**3580, Shibokusa Aza-Komanba, Oshino-mura**
**Minamitsuru-gun, Yamanashi 401-05(JP)**

(72) Inventor: **NAKAMURA, Kosei Fanuc Dai-3**
**Vira-karamatsu**
**3527-1, Shibokusa Oshino-mura**
**Minamitsuru-gun Yamanashi 401-05(JP)**
Inventor: **KATSUZAWA, Yukio**
**1915-5, Funatsu, Kawaguchiko-cho**
**Minamitsuru-gun Yamanashi(JP)**
Inventor: **MASUYA, Michi Fanuc Dai-3**
**Vira-karamatsu**
**3527-1, Shibokusa Oshino-mura**
**Minamitsuru-gun Yamanashi 401-05(JP)**

(74) Representative: **Otte, Peter, Dipl.-Ing.**
**Tiroler Strasse 15**
**W-7250 Leonberg(DE)**

(54) **CONSTRUCTION FOR COOLING MOTOR.**

(57) In order to increase the power of a motor, it is necessary to efficiently cool the motor, and there is adopted a construction for cooling the interior of the motor with clean air. Namely, the cooling construction is of such an arrangement that a piping (18) communicating with the interior of the motor to circulate therein the air is provided outside a motor casing (14), liquid is led out to the outside from a flow path (34) of the liquid for cooling a stator (32), made to flow into a piping (20) for heat exchange, which passes through the said piping (18) and returned to the said flow path (34) to cool the air circulating in the piping (18).

Fig.1

TECHNICAL FIELD

The present invention relates to a construction of a motor whereby the inside of the motor is cooled.

BACKGROUND ART

Conventionally, as a construction used for cooling a motor, use has been made of the jacket type cooling construction whereby the stator is cooled by a fluid from the outside. With this system, however, either the rotor inside the motor can not be cooled efficiently or the inner circumference of the stator can not be cooled efficiently, and thus it is not possible to increase the power of the motor without overheating same. Therefore, attempts have been made to cool the inside of the motor by a direct introduction of a coolant, but these attempts encountered many problems, such as the need for a complete insulation of the coil, etc.

DISCLOSURE OF THE INVENTION

Therefore, an object of the present invention is the provision of a construction enabling an easy cooling of the inside of a motor.

In consideration of the above object, the present invention provides a construction for cooling a motor, comprising a stator having an outer circumference portion thereof defining a fluid passage means therein for cooling the stator from the outer circumference thereof by a fluid; characterized in that said motor includes a casing thereof, said casing having an air circulation duct at an outside of said casing, communicated with an inside of said motor through a through hole, a fan apparatus is provided for a forced circulation of air in said duct, and a heat exchange duct means is provided for leading said fluid to the outside of said casing from a middle of said fluid passage means, and for passing said fluid through an inside of said duct to thereby cool the air in said duct, and then returning said fluid to said fluid passage means.

First, if air in the environment in which the motor is used is fed inside the motor, the dust in the air and oil vapors would be included therein, which is not desirable. Therefore, air is circulated inside the motor through an air duct provided at the outside, the air being circulated by a fan. The circulated air is cooled by leading a fluid, used for cooling the stator from the outside, from the middle of the passage through a heat exchange duct passing through the duct in which the air is circulated, to thus cool the circulated air. Namely, a coolant fluid is used to cool the air.

BRIEF DESCRIPTION OF THE DRAWINGS

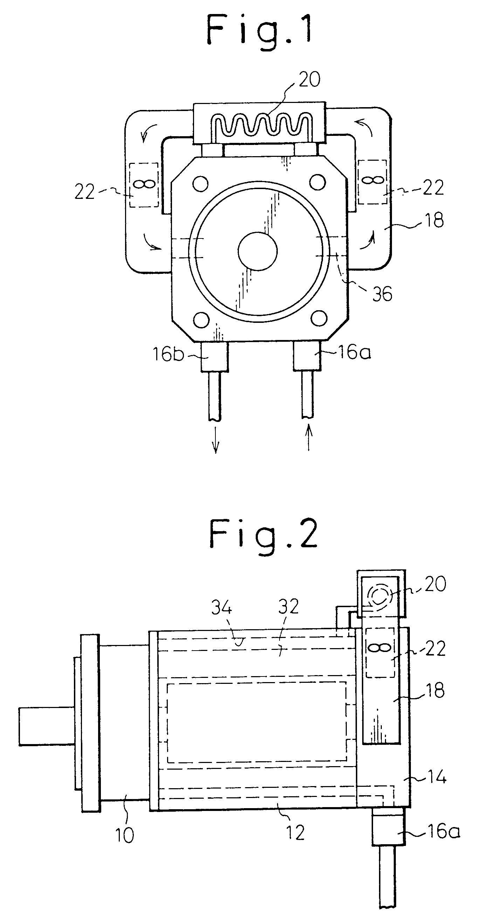

Figure 1 is a front view of a motor having a cooling construction according to the present invention and
Fig. 2 is a side view of the motor of Fig. 1.

BEST MODE OF CARRYING OUT THE INVENTION

A detailed explanation will be made of the invention, based on an embodiment shown in the attached drawings. In general, a motor casing is comprised of a center casing portion 12 holding a stator 32, a front casing portion 10, and a rear casing portion 14. To cool the stator 32, the outer circumference of the stator 32 is covered by a covering member, a coolant passage 34 is formed in the covering member, a coolant is introduced through a charging port 16a communicating the passage 34 with an outside coolant supply source, to cool the stator 32 from the outside, and the coolant is thereafter discharged from a discharge port 16a and returned to the coolant supply source.

In the present invention, the coolant is used for cooling a circulating air, and accordingly, is led from the middle of the passage 34 to a heat exchange duct 20 and then returned to the channel 34. Further, in the present invention, a duct 18 communicated with the space inside the motor through a through hole 36 provided in the rear casing portion 14 is provided at the outside of the rear casing portion 14. A fan apparatus 22 for a forced circulation of air is mounted in the middle of the duct 18. The duct 18 passes through the heat exchange duct 20 and thus the coolant therein cools the circulated air flowing through the duct 18.

The closed loop circulation of the air in the motor casing ensures that no dust in the atmosphere or oil vapor enters the motor. The heat absorbing action of the circulated air is ensured by using the coolant used for cooling the stator from the outside, thus lowering the cost of the cooling apparatus. Note, in this embodiment, the air circulation duct is provided in the rear casing 14, but may be also provided in the front casing 10 or may be provided so as to span the two, to thereby improve the circulation of the air in the motor. Note, it is, of course, necessary to apply a suitable sealing means when forming the coolant passage and the air circulation duct 18.

As clear from the above explanation, according to the present invention it is possible to efficiently cool the motor without the addition of coolant passage piping, i.e. by only the addition of a heat exchanger, and further without contaminating the inside of the motor, because a closed air circulation loop is used. Therefore, the power of the motor can be easily increased without overheating.

LIST OF REFERENCE NUMERALS

10     front casing
12     center casing
14     rear casing
18     air circulating duct
20     heat exchange duct
22     fan apparatus1

**Claims**

1.   A construction for cooling a motor, comprising a stator having an outer circumference portion thereof defining a fluid passage means therein for cooling the stator from the outer circumference thereof by a fluid; characterized in that said motor includes a casing thereof, said casing having an air circulation duct at an outside of said casing, communicated with an inside of said motor through a through hole, a fan apparatus is provided for a forced circulation of air in said duct, and a heat exchange duct means is provided for leading said fluid to the outside of said casing from a middle of said fluid passage means, and for passing said fluid through an inside of said duct to thereby cool the air in said duct, and then returning said fluid to said fluid passage means.

# Fig.1

# Fig.2

# INTERNATIONAL SEARCH REPORT

**I. CLASSIFICATION OF SUBJECT MATTER** (if several classification symbols apply, indicate all) [6]

According to International Patent Classification (IPC) or to both National Classification and IPC

Int. Cl$^5$   H02K9/18

**II. FIELDS SEARCHED**

Minimum Documentation Searched [7]

| Classification System | Classification Symbols |
|---|---|
| IPC | H02K9/00 |

Documentation Searched other than Minimum Documentation
to the Extent that such Documents are Included in the Fields Searched [8]

| | |
|---|---|
| Jitsuyo Shinan Koho | 1926 – 1991 |
| Kokai Jitsuyo Shinan Koho | 1971 – 1991 |

**III. DOCUMENTS CONSIDERED TO BE RELEVANT** [9]

| Category [*] | Citation of Document, [11] with indication, where appropriate, of the relevant passages [12] | Relevant to Claim No. [13] |
|---|---|---|
| Y | JP, A, 48-92811 (Hitachi, Ltd.), December 1, 1973 (01. 12. 73), (Family: none) | 1 |
| Y | JP, U, 56-139360 (Toshiba Corp.), October 21, 1981 (21. 10. 81), (Family: none) | 1 |
| Y | JP, U, 58-159872 (Toshiba Corp.), October 25, 1983 (25. 10. 83), (Family: none) | 1 |
| Y | JP, U, 59-165524 (Mitsubishi Heavy Industries, Ltd.), November 6, 1984 (06. 11. 84), (Family: none) | 1 |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search | Date of Mailing of this International Search Report |
|---|---|
| July 25, 1991 (25. 07. 91) | August 12, 1991 (12. 08. 91) |

| International Searching Authority | Signature of Authorized Officer |
|---|---|
| Japanese Patent Office | |

Form PCT/ISA/210 (second sheet) (January 1985)